# EUROPÄISCHE PATENTSCHRIFT

(11) **EP 3 084 987 B1**
(45) Veröffentlichungstag und Bekanntmachung des Hinweises auf die Patenterteilung: **27.03.2019**
(21) Anmeldenummer: 14799813.2
(22) Anmeldetag: 20.11.2014
(51) Int. Cl.: H04B 10/116, G08C 23/04

(54) **SYSTEM MIT EINEM HAUSHALTSGERÄT UND EINEM FUNKTIONSMODUL, HAUSHALTSGERÄT, FUNKTIONSMODUL UND ENTSPRECHENDES VERFAHREN**
SYSTEM COMPRISING A DOMESTIC APPLIANCE AND A FUNCTIONAL MODULE, DOMESTIC APPLIANCE, FUNCTIONAL MODULE AND CORRESPONDING METHOD
SYSTÈME COMPRENANT UN APPAREIL MÉNAGER ET UN MODULE FONCTIONNEL, APPAREIL MÉNAGER, MODULE FONCTIONNEL ET PROCÉDÉ CORRESPONDANT

(30) Priorität: 18.12.2013 DE 102013226378
(43) Veröffentlichungstag der Anmeldung: 26.10.2016
(73) Patentinhaber: BSH Hausgeräte GmbH, 81739 München (DE)
(72) Erfinder: BÖLDT, Frank, 14656 Brieselang (DE); KOLBE, Andreas, 12683 Berlin (DE)
(86) Internationale Anmeldenummer: PCT/EP2014/075095
(87) Internationale Veröffentlichungsnummer: WO 2015/090825

(56) Entgegenhaltungen:
- CN-U- 201 450 529
- US-A1- 2006 056 855
- US-A1- 2007 147 843
- US-A1- 2007 186 594

## Beschreibung

Die Erfindung betrifft ein System mit einem Haushaltsgerät und einem von dem Haushaltsgerät separaten Funktionsmodul, wobei das Haushaltsgerät und das Funktionsmodul zur zumindest unidirektionalen drahtlosen Datenkommunikation miteinander ausgebildet sind, und wobei ein erster der beiden Kommunikationspartner Haushaltsgerät oder Funktionsmodul einen Sender umfasst, welcher einen Modulator zum Bereitstellen eines elektrischen Sendenachrichtensignals sowie eine Lichtquelle zum Aussenden eines entsprechend dem Sendenachrichtensignal modulierten Lichtsignals umfasst, während der zweite der Kommunikationspartner einen Empfänger zum Empfangen des Lichtsignals und zum Bereitstellen eines elektrischen Empfangsnachrichtensignals aus dem Lichtsignal umfasst. Die Erfindung betrifft außerdem ein Haushaltsgerät, ein Funktionsmodul sowie ein entsprechendes Verfahren.

Es ist bereits Stand der Technik, ein Haushaltsgerät mit einer Kommunikationseinrichtung auszustatten, mittels welcher das Haushaltsgerät mit externen Geräten kommunizieren kann, nämlich beispielsweise mit anderen Haushaltsgeräten oder aber mit einem separaten Modul. Ein derartiges Steuermodul kann beispielsweise den Betrieb einer Mehrzahl von Haushaltsgeräten untereinander koordinieren. Dies kann beispielsweise dazu dienen, um die momentane Leistungsaufnahme der Haushaltsgeräte im Haushalt unter einem vorbestimmten Grenzwert zu halten. Durch eine solche Vorgehensweise können außerdem Kosten gespart werden, weil das separate Modul die Haushaltsgeräte zu einem Zeitpunkt betreiben kann, zu welchem der Preis für elektrische Energie relativ gering ist. Außerdem sind auch Module bekannt, über welche eine Bedienung der Haushaltsgeräte durch den Benutzer selbst möglich ist. Solche Module können die Funktionalität eines Haushaltsgeräts erweitern.

Diesbezüglich offenbart die Druckschrift GB 2 015 870 A eine Geschirrspülmaschine, welche mittels eines Bedienmoduls bedient werden kann. Dieses Bedienmodul ist separat zur Spülmaschine bereitgestellt und kommuniziert mit derselben mittels Ultraschallsignalen oder aber mit Hilfe von Infrarotsignalen. Das Bedienmodul kann auch an der Spülmaschine abnehmbar befestigt werden.

Eine Waschmaschine mit einer drahtlosen Kommunikationssteuerung ist auch aus der DE 10 2007 001 880 A1 bekannt. Auch hier erfolgt die Datenkommunikation drahtlos, nämlich insbesondere über Infrarotsignale oder gemäß dem Bluetooth-Standard.

Die US 2007/0147843 A1 beschreibt eine Vorrichtung für die Datenkommunikation mittels sichtbaren Lichts, die ein Licht emittierendes Element, einen Modulator und eine Steuereinheit umfasst.

In der US 2006/0056855 A1 wird ein System vorgeschlagen, mit einer LED und einem Modulator, der fähig ist, mehrere Informationen zu multiplexen.

Die CN 201 450 529 U stellt ein weiteres Dokument des Standes der Technik dar.

Die Vernetzung und die Einführung neuer Funktionen und Technologien im Bereich der elektronischen Bedienung und der Datenkommunikation bei Haushaltsgeräten führen allmählich zu einer Erhöhung der Komplexität bei den Geräten, und zwar sowohl für die Hersteller selbst als auch für den Benutzer, also den Endverbraucher. Um bei der Anbindung der Haushaltsgeräte an neue, externe Informationsinfrastrukturen und bei der Erweiterung der Funktionalitäten der Haushaltsgeräte durch externe Zusatzmodule die daraus resultierenden Abhängigkeiten der Haushaltsgeräte von der Funktions- und Kostenstruktur gering zu halten, sind neue technische Lösungen erforderlich, welche die Erweiterung der Funktionalitäten von Haushaltsgeräten durch - auch vom Benutzer nachbestellbare - elektronische Funktionsmodule einfach und sicher erlauben. Es wäre also wünschenswert, gäbe es ein Haushaltsgerät, welches in seiner Funktionalität durch Anbindung eines separaten Funktionsmoduls ohne viel Aufwand nachträglich erweitert werden könnte.

Bei der Erweiterung der Funktionen eines Haushaltsgeräts durch den Einsatz eines separaten Funktionsmoduls soll zum einen eine galvanische bzw. elektrische Potenzialtrennung zwischen dem Haushaltsgerät einerseits und dem separaten Funktionsmodul andererseits gewährleistet werden, um den verschiedenen Normen hinsichtlich der Schutzklassen genügen zu können. Dies wird beispielsweise durch die genannte drahtlose Datenkommunikation - insbesondere durch die Infrarotkommunikation - ermöglicht. Zum anderen soll jedoch diese Einschränkung bezüglich der galvanischen Trennung die Zuverlässigkeit der Datenkommunikation nicht beeinflussen. Diesbezüglich hat sich insbesondere der Bluetooth-Standard als ungenügend erwiesen, weil hier die benötigten Datenraten nicht erreicht werden können. Außerdem soll auch - wie bereits ausgeführt - ein späteres Nachrüsten eines Haushaltsgeräts mit dem genannten Funktionsmodul möglich sein.

Es ist Aufgabe der Erfindung, eine im Vergleich zum Stand der Technik verbesserte Datenkommunikation zwischen einem Haushaltsgerät und einem separaten Funktionsmodul vorzuschlagen.

Diese Aufgabe wird erfindungsgemäß durch ein System, durch ein Haushaltsgerät, durch ein Funktionsmodul sowie durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes System umfasst ein Haushaltsgerät und ein dazu externes Funktionsmodul, welche zur zumindest unidirektionalen drahtlosen bzw. kontaktlosen Datenkommunikation miteinander ausgebildet sind. Ein erster der Kommunikationspartner umfasst einen Sender, welcher einen Modulator zum Bereitstellen eines elektrischen Sendenachrichtensignals und eine Lichtquelle zum Aussenden eines entsprechend dem Sendenachrichtensignal modulierten Lichtsignals umfasst. Der zweite der beiden Kommunikationspartner umfasst wiederum einen Empfänger, der zum Empfangen des Lichtsignals und zum Bereitstellen eines elektrischen Empfangsnachrichtensignals aus dem Lichtsignal dient. Erfindungsgemäß ist vorgesehen, dass die Lichtquelle des Senders zum Erzeugen des Lichtsignals in einem für den Menschen sichtbaren Spektralbereich ausgebildet ist, und dass der Empfänger zum Empfangen des Lichtsignals im sichtbaren Spektralbereich ausgebildet ist.

Demnach wird eine Datenkommunikation zwischen dem Haushaltsgerät und dem Funktionsmodul mittels sichtbaren Lichts vorgeschlagen. Eine solche Vorgehensweise hat diverse Vorteile: Es wird die nötige galvanische Potenzialtrennung zwischen dem Haushaltsgerät und dem Funktionsmodul gewährleistet, und es sind keine zusätzlichen Maßnahmen für einen Berührungsschutz und/oder einen Spritzwasserschutz notwendig, was sich insbesondere bei einem wasserführenden Haushaltsgerät als besonders vorteilhaft erweist. Weiterhin ist eine relativ hohe Datenrate bei gleichzeitig geringer Latenz der Datenübertragung möglich. Abhängig von der Lichtintensität kann nämlich eine Datenrate bis zu 500 Megabit pro Sekunde (Mbit/s) erreicht werden. Diese Datenrate liegt deutlich höher als beispielsweise bei dem Bluetooth-Standard. Ein weiterer Vorteil besteht in der besonders einfachen Nachrüstung des Haushaltsgeräts. Als Lichtquelle kann nämlich eine beliebige Leuchtdiode genutzt werden, wie sie bei Haushaltsgeräten ohnehin in vielfältiger Ausgestaltung bereits vorhanden sind. Es braucht somit prinzipiell keine zusätzliche Lichtquelle eingesetzt zu werden. Durch die rein optische Datenkommunikation, bei welcher sich das Haushaltsgerät in direkter Sichtverbindung ("line of sight") mit dem Funktionsmodul befindet, ist des Weiteren ein absolut störungsfreier, emissionsfreier und abhörsicherer Betrieb bei der drahtlosen Datenübertragung möglich.

Das sichtbare Lichtsignal weist bevorzugt eine Wellenlänge auf, welche in einem Wertebereich von 400 nm bis 700 nm liegt. Das Lichtsignal kann auch mehrere Lichtanteile mit unterschiedlichen Spektralbereichen beinhalten, wobei dann die Wellenlänge der jeweiligen Lichtanteile bevorzugt in dem genannten Wertebereich liegt.

Unter dem "Sendenachrichtensignal" wird ein digitales Modulationssignal verstanden, mittels welchem die Lichtquelle modelliert wird. In dem Sendenachrichtensignal sind die zu übertragenden Nachrichten enthalten, welche mittels des Modulators dem Lichtsignal aufgeprägt werden. Entsprechend wird unter dem "Empfangsnachrichtensignal" ein digitales Signal verstanden, welches die von dem Empfänger empfangenen Nachrichten beinhaltet. Dieses Empfangsnachrichtensignal wird bevorzugt einer Recheneinrichtung des zweiten Kommunikationspartners zugeführt und durch diese ausgewertet.

Unter einem "Haushaltsgerät" wird vorliegend ein Gerät verstanden, welches zur Haushaltsführung eingesetzt wird. Das Haushaltsgerät ist bevorzugt ein Haushaltsgroßgerät, nämlich insbesondere ein Gerät zur Pflege von Wäschestücken oder ein Gargerät oder eine Geschirrspülmaschine. In einer Ausführungsform kann das Haushaltsgerät eine Waschmaschine, ein Waschtrockner oder ein Wäschetrockner sein.

Es ist bevorzugt das Haushaltsgerät, welches als erster Kommunikationspartner den Sender aufweist. Das externe Funktionsmodul stellt somit den zweiten Kommunikationspartner dar, welcher den genannten Empfänger aufweist. Somit können die ohnehin bereits vorhandenen Leuchtdioden des Haushaltsgeräts als Lichtquelle zum Aussenden des Lichtsignals genutzt werden. Außerdem kann somit eine relativ hohe Datenrate bei der Datenübertragung von dem Haushaltsgerät an das Funktionsmodul erreicht werden.

Alternativ ist es aber auch möglich, das Funktionsmodul mit dem genannten Sender und das Haushaltsgerät mit dem Empfänger auszugestalten.

Vorzugsweise erfolgt die Datenkommunikation zwischen dem Sender und dem Empfänger gemäß dem IEEE 802.14.VLC-Kommunikationsstandard, das heißt dem VLC-Standard (Visible Light Communication).

Erfindungsgemäß erzeugt die Lichtquelle des Senders das Lichtsignal aus zumindest zwei Lichtanteilen, die voneinander verschiedene Farben aufweisen. Dabei moduliert der Modulator lediglich eine Untermenge der Lichtanteile, insbesondere ausschließlich einen einzigen der Lichtanteile, entsprechend dem Sendenachrichtensignal, um das modulierte Lichtsignal zu erzeugen. Entsprechend ist der Empfänger dazu ausgebildet, das elektrische Empfangsnachrichtensignal selektiv lediglich aus der Untermenge der Lichtanteile des Lichtsignals bereitzustellen. Dazu kann bei dem Empfänger beispielsweise ein entsprechendes Farbfilter oder aber eine Photodiode eingesetzt werden, welche lediglich für einen bestimmten Lichtanteil bzw. eine bestimmte Farbe empfindlich ist. Das Modulieren lediglich einer Untermenge der Lichtanteile des Lichtsignals hat den Vorteil, dass die Modulation insgesamt unsichtbar für das menschliche Auge erfolgt, sodass die Datenkommunikation durch den Benutzer nicht wahrgenommen wird.

In einer Ausführungsform kann die Lichtquelle zumindest zwei Leuchtelemente, insbesondere zumindest zwei LEDs, aufweisen, mittels denen die zumindest zwei verschiedenen Lichtanteile des Lichtsignals erzeugt werden. Der Modulator ist dann lediglich mit einer Untermenge der Leuchtelemente, insbesondere mit ausschließlich einem der Leuchtelemente, zur Ansteuerung bzw. zur Modulation dieser Untermenge elektrisch gekoppelt. Somit kann ein Lichtsignal mit mehreren, unterschiedlichen Lichtanteilen ohne viel Aufwand bereitgestellt werden.

Es erweist sich als vorteilhaft, wenn die Lichtquelle zum Erzeugen eines weißen Lichtsignals aus den zumindest zwei Lichtanteilen - beispielsweise aus einem roten, einem grünen und einem blauen Lichtanteil - ausgebildet ist. Die hohe Helligkeit des weißen Lichtsignals sorgt für eine entsprechend hohe Datenrate bei der Datenübertragung. Außerdem wird ein weißes Licht bekanntlich mit Hilfe von zumindest zwei verschiedenen Leuchtelementen erzeugt, nämlich eines blauen Leuchtelements sowie zumindest eines weiteren Leuchtelements. Die Datenkommunikation kann ohne viel Aufwand implementiert werden, indem beispielsweise das blaue Leuchtelement entsprechend angesteuert und der blaue Lichtanteil somit moduliert wird.

Also kann ein blauer, insbesondere ausschließlich der blaue, Lichtanteil des Lichtsignals moduliert werden. Der Empfänger kann bei dieser Ausführungsform das elektrische Empfangsnachrichtensignal selektiv aus dem blauen Lichtanteil des Lichtsignals bereitstellen. Beispielsweise wird hier ein Blaufilter bei einer herkömmlichen Photodiode oder aber eine Photodiode eingesetzt, welche selektiv lediglich für ein Blaulicht empfindlich ist. Das Lichtsignal lässt sich somit unsichtbar für das menschliche Auge modulieren.

Es erweist sich als vorteilhaft, wenn die Lichtquelle an einer Bedienblende des Haushaltsgeräts angeordnet ist und zusätzlich einen Bestandteil einer Anzeigeeinrichtung des Haushaltsgeräts bildet, welcher zur optischen Anzeige von Benutzerinformationen des Haushaltsgeräts ausgebildet ist. Es kann somit eine bei dem Haushaltsgerät ohnehin bereits vorhandene Lichtquelle zusätzlich zur Datenkommunikation mit dem externen Funktionsmodul genutzt werden. Auf diese Art und Weise kann das Haushaltsgerät ohne viel Aufwand mit einem Funktionsmodul nachgerüstet werden, ohne dass eine zusätzliche Lichtquelle eingesetzt werden muss. Die Lichtquelle kann dabei beispielsweise eine Lichtquelle eines Displays oder aber eine Lichtquelle sein, welche den eingeschalteten Zustand des Haushaltsgeräts kennzeichnet.

Vorzugsweise sind das Haushaltsgerät und das Funktionsmodul zur bidirektionalen drahtlosen Datenkommunikation miteinander ausgebildet. Der zweite Kommunikationspartner kann also zusätzlich zu seinem Empfänger auch einen Sender aufweisen, der zum Aussenden eines Kommunikationssignals in einem von dem Spektralbereich des Lichtsignals verschiedenen Spektralbereich ausgebildet ist. Dieser Spektralbereich liegt vorzugsweise vollständig getrennt von dem Spektralbereich des Lichtsignals. Entsprechend kann auch der erste Kommunikationspartner zusätzlich zu seinem Sender auch einen Empfänger aufweisen, der zum Empfangen des Kommunikationssignals ausgebildet ist. Weil die Datenkommunikation in dieser zweiten Richtung in einem vollständig unterschiedlichen Spektralbereich vorgenommen wird, wird die Interferenz zwischen dem Kömmunikationssignal einerseits und dem Lichtsignal andererseits vollständig verhindert oder zumindest weitgehend reduziert. Es können somit Daten gleichzeitig in beide Richtungen übertragen werden.

Der Sender des zweiten Kommunikationspartners ist bevorzugt zum Erzeugen eines Infrarotsignals als Kommunikationssignal ausgebildet. Die Übertragung von Daten von dem zweiten Kommunikationspartner an den ersten Kommunikationspartner findet somit mit Hilfe eines Infrarotsignals statt, wodurch dem Erfordernis der galvanischen Trennung genüge getan wird. Außerdem ist somit eine gegenseitige Störung bei der gleichzeitigen Datenkommunikation in beide Richtungen ausgeschlossen.

Der Sender des zweiten Kommunikationspartners kann vorzugsweise zum Erzeugen eines ungerichteten Lichtsignals - insbesondere ungerichteten Infrarotsignals - als Kommunikationssignal ausgebildet sein. Mit anderen Worten wird von dem Sender des zweiten Kommunikationspartners vorzugsweise ein Lichtsignal ausgesendet, welches nicht in eine bestimmte Richtung gebündelt wird. Dies bedeutet, dass bei dem Sender des zweiten Kommunikationspartners vorzugsweise keine Linse eingesetzt wird, sondern das Lichtsignal ungestört von dem Sender bzw. einer entsprechenden Lichtquelle (beispielsweise Infrarotquelle) ausgesendet wird. Somit braucht das Funktionsmodul nicht mühsam auf das Haushaltsgerät ausgerichtet zu werden, sondern kann lediglich grob in Richtung zum Haushaltsgerät positioniert werden.

Um das Funktionsmodul mit elektrischer Energie versorgen zu können, kann das Haushaltsgerät eine Primärspule zur induktiven Übertragung von elektrischer Energie an das Funktionsmodul aufweisen. Entsprechend kann das Funktionsmodul eine Sekundärspule zum Empfangen der elektrischen Energie aufweisen, sodass das Funktionsmodul mit der empfangenen elektrischen Energie im Betrieb versorgt wird. Auf diese Art und Weise kann das Funktionsmodul ohne viel Aufwand mit elektrischer Energie versorgt werden; es braucht dazu beispielsweise lediglich auf dem Haushaltsgerät positioniert zu werden. Eine zusätzliche Steckdose ist nicht erforderlich.

Ergänzend oder alternativ kann das Funktionsmodul auch einen elektrischen Anschluss in Form eines Steckers aufweisen, über welchen das Funktionsmodul an ein öffentliches Stromnetz angeschlossen werden kann, sodass die Versorgung mit elektrischer Energie drahtgebunden erfolgt.

Das Funktionsmodul kann verschiedenste Funktionen aufweisen:
Das Funktionsmodul kann eine Netzwerkschnittstelle aufweisen, welche zum Anschließen des Funktionsmoduls an ein Netzwerk dient. Beispielsweise kann das Funktionsmodul eine Schnittstelle zum Anschließen an ein lokales Netzwerk und/oder eine Schnittstelle zum Anschließen an das Internet aufweisen. Das Funktionsmodul stellt dann vorzugsweise ein Gateway zur Anbindung des Haushaltsgeräts an das Netzwerk dar. Das Haushaltsgerät kann somit beispielsweise mit anderen Haushaltsgeräten und/oder mit einem Internetserver über das Funktionsmodul kommunizieren.

Ergänzend oder alternativ kann das Funktionsmodul eine Schnittstelle zum Anschließen eines Programmiergeräts zum Programmieren des Haushaltsgeräts aufweisen. Auf diese Art und Weise können auf das Haushaltsgerät Betriebsdaten bzw. Konfigurationsdaten bei der Fertigung des Haushaltsgeräts und/oder durch den Kundendienst überspielt werden. Beispielsweise lassen sich über das Funktionsmodul auch neue Betriebsprogramme an das Haushaltsgerät übertragen.

Weiterhin ergänzend oder alternativ kann das Funktionsmodul eine Schnittstelle zum Anschließen eines Diagnosegeräts aufweisen, welches zum Auslesen von Fehlerdaten aus einem Fehlerspeicher des Haushaltsgeräts dient.

Weiterhin ergänzend oder alternativ kann das Funktionsmodul eine durch den Benutzer betätigbare Bedieneinrichtung aufweisen, welche zum Bedienen und somit zur drahtlosen Steuerung des Haushaltsgeräts ausgebildet ist. Somit kann der Benutzer das Haushaltsgerät unter Vermittlung des separaten Funktionsmoduls bedienen.

Das Funktionsmodul kann zusätzlich oder alternativ auch ein Display zur optischen Anzeige von Benutzerinformationen des Haushaltsgeräts aufweisen. Diese Informationen können beispielsweise die gleichen Informationen sein, wie sie üblicherweise bei einem fest am Haushaltsgerät installierten Display angezeigt werden.

Das Funktionsmodul kann auch die Funktion eines Steuermoduls übernehmen, mittels welchem der Betrieb des Haushaltsgeräts - und gegebenenfalls auch weiterer Haushaltsgeräte - gesteuert werden kann. Diese Steuerung kann insbesondere auch unter Berücksichtigung von internet-basierten Informationen erfolgen, wie vorzugsweise unter Berücksichtigung der Energiepreise. Die Steuerung kann ergänzend oder alternativ so vorgenommen werden, dass eine vorbestimmte maximale Leistungsaufnahme im Haushalt nicht überschritten wird.

Ganz allgemein kann das Funktionsmodul an das Haushaltsgerät Daten übertragen, welche Steuerbefehle beinhalten, die zur Ansteuerung des Haushaltsgeräts ausgelegt sind.

Die Erfindung betrifft auch ein Haushaltsgerät mit zumindest einer ersten Kommunikationseinrichtung zur drahtlosen Datenübertragung mit einem externen Funktionsmodul in einer ersten Kommunikationsrichtung, wobei die erste Kommunikationseinrichtung einen Sender oder einen Empfänger umfasst. Hat die Kommunikationseinrichtung den Sender, so umfasst dieser einen Modulator zum Bereitstellen eines elektrischen Sendenachrichtensignals sowie eine Lichtquelle zum Aussenden eines entsprechend dem Sendenachrichtensignal modulierten Lichtsignals. Die Lichtquelle des Senders ist zum Erzeugen des Lichtsignals in einem sichtbaren Spektralbereich ausgebildet. Hat die Kommunikationseinrichtung den Empfänger, so ist dieser zum Empfangen eines Lichtsignals im sichtbaren Spektralbereich und zum Bereitstellen eines elektrischen Empfangsnachrichtensignals aus diesem Lichtsignal ausgebildet.

Die mit Bezug auf das erfindungsgemäße System vorgestellten bevorzugten Ausführungsformen und deren Vorteile gelten entsprechend für das erfindungsgemäße Haushaltsgerät. Insbesondere können somit bei dem Haushaltsgerät folgende Ausführungsformen vorgesehen sein:
Umfasst die erste Kommunikationseinrichtung des Haushaltsgeräts den Sender, so erzeugt die Lichtquelle das Lichtsignal aus zumindest zwei Lichtanteilen, die voneinander verschiedene Farben aufweisen, wobei der Modulator dann entsprechend dem Sendenachrichtensignal lediglich eine Untermenge der Lichtanteile, insbesondere ausschließlich einen der Lichtanteile, moduliert, um das modulierte Lichtsignal zu erzeugen.

Umfasst die erste Kommunikationseinrichtung den Empfänger, so stellt dieser das elektrische Empfangsnachrichtensignal selektiv aus lediglich einer Untermenge von unterschiedliche Farben aufweisenden Lichtanteilen des Lichtsignals, insbesondere aus lediglich einem der Lichtanteile des Lichtsignals, bereit.

Umfasst die erste Kommunikationseinrichtung den Sender, so kann die Lichtquelle zumindest zwei Leuchtelemente, insbesondere zumindest zwei Leuchtdioden, zum Erzeugen der zumindest zwei verschiedenen Lichtanteile des Lichtsignals aufweisen, wobei der Modulator dann lediglich mit einer Untermenge der Leuchtelemente, insbesondere mit ausschließlich einem der Leuchtelemente, zur Ansteuerung dieser Untermenge elektrisch gekoppelt ist.

Umfasst die erste Kommunikationseinrichtung den Sender, so kann die Lichtquelle zum Erzeugen eines weißen Lichtsignals aus den zumindest zwei Lichtanteilen ausgebildet sein.

Umfasst die erste Kommunikationseinrichtung den Empfänger, so kann dieser das elektrische Empfangsnachrichtensignal selektiv lediglich aus einer Untermenge von Lichtanteilen eines weißen Lichtsignals, insbesondere aus lediglich einem der Lichtanteile des weißen Lichtsignals, bereitstellen.

Umfasst die erste Kommunikationseinrichtung den Sender, so kann der Modulator zum Modulieren eines blauen, insbesondere ausschließlich des blauen, Lichtanteils des Lichtsignals ausgebildet sein.

Umfasst die erste Kommunikationseinrichtung den Empfänger, so kann dieser das elektrische Empfangsnachrichtensignal selektiv aus einem blauen Lichtanteil, insbesondere ausschließlich aus dem blauen Lichtanteil, des Lichtsignals bereitstellen.

Umfasst die erste Kommunikationseinrichtung des Haushaltsgeräts den Sender, so kann die Lichtquelle an einer Bedienblende des Haushaltsgeräts angeordnet sein und zusätzlich einen Bestandteil einer Anzeigeeinrichtung des Haushaltsgeräts bilden, welche zur optischen Anzeige von Benutzerinformationen des Haushaltgeräts ausgebildet ist.

Das Haushaltsgerät kann auch eine zweite Kommunikationseinrichtung zur drahtlosen Datenübertragung mit dem externen Funktionsmodul in einer zur ersten Kommunikationsrichtung entgegengesetzten zweiten Kommunikationsrichtung umfassen. Diese zweite Kommunikationseinrichtung kann einen Sender oder einen Empfänger umfassen. Der Sender ist zum Aussenden eines Kommunikationssignals in einem von dem Spektralbereich des Lichtsignals der ersten Kommunikationseinrichtung verschiedenen Spektralbereich ausgebildet. Der Empfänger ist zum Empfangen eines Kommunikationssignals in einem von dem Spektralbereich des Lichtsignals der ersten Kommunikationseinrichtung verschiedenen Spektralbereich ausgebildet.

Der Sender der zweiten Kommunikationseinrichtung kann zum Erzeugen eines Infrarotsignals als Kommunikationssignal ausgebildet sein. Der Empfänger der zweiten Kommunikationseinrichtung kann wiederum zum Empfangen eins Infrarotsignals als Kommunikationssignal ausgebildet sein.

Das Haushaltsgerät kann auch eine Primärspule zur induktiven Übertragung von elektrischer Energie an das Funktionsmodul aufweisen.

Die Erfindung betrifft auch ein Funktionsmodul mit zumindest einer ersten Kommunikationseinrichtung zur drahtlosen Datenübertragung mit einem von dem Funktionsmodul separaten Haushaltsgerät in einer ersten Kommunikationsrichtung, wobei die erste Kommunikationseinrichtung zum Senden oder Empfangen von auf einen Betrieb des Haushaltsgeräts bezogenen Daten ausgebildet ist und einen Sender oder einen Empfänger umfasst. Umfasst die erste Kommunikationseinrichtung den Sender, so weist dieser einen Modulator zum Bereitstellen eines elektrischen Sendenachrichtensignals sowie eine Lichtquelle auf, welche zum Aussenden eines entsprechend dem Sendenachrichtensignal modulierten Lichtsignals in einem sichtbaren Spektralbereich ausgebildet ist. Umfasst die erste Kommunikationseinrichtung wiederum den Empfänger, so ist dieser zum Empfangen des Lichtsignals im sichtbaren Spektralbereich und zum Bereitstellen eines elektrischen Empfangsnachrichtensignals aus diesem Lichtsignal ausgebildet.

Die mit Bezug auf das erfindungsgemäße System vorgestellten bevorzugten Ausführungsformen und deren Vorteile gelten entsprechend für das erfindungsgemäße Funktionsmodul. Bei dem Funktionsmodul können also insbesondere folgende Ausführungsformen vorgesehen sein:
Umfasst die erste Kommunikationseinrichtung des Funktionsmoduls den Sender, so erzeugt die Lichtquelle das Lichtsignal aus zumindest zwei Lichtanteilen, die voneinander verschiedene Farben aufweisen, wobei der Modulator dann entsprechend dem Sendenachrichtensignal lediglich eine Untermenge der Lichtanteile, insbesondere ausschließlich einen der Lichtanteile, moduliert, um das modulierte Lichtsignal zu erzeugen.

Umfasst die erste Kommunikationseinrichtung des Funktionsmoduls den Empfänger, so stellt dieser das elektrische Empfangsnachrichtensignal selektiv aus lediglich einer Untermenge von unterschiedliche Farben aufweisenden Lichtanteilen des Lichtsignals, insbesondere aus lediglich einem der Lichtanteile des Lichtsignals, bereit.

Umfasst die erste Kommunikationseinrichtung des Funktionsmoduls den Sender, so kann die Lichtquelle zumindest zwei Leuchtelemente, insbesondere zumindest zwei Leuchtdioden, zum Erzeugen der zumindest zwei verschiedenen Lichtanteile des Lichtsignals aufweisen, wobei der Modulator dann lediglich mit einer Untermenge der Leuchtelemente, insbesondere mit ausschließlich einem der Leuchtelemente, zur Ansteuerung dieser Untermenge elektrisch gekoppelt ist.

Umfasst die erste Kommunikationseinrichtung des Funktionsmoduls den Sender, so kann die Lichtquelle zum Erzeugen eines weißen Lichtsignals aus den zumindest zwei Lichtanteilen ausgebildet sein.

Umfasst die erste Kommunikationseinrichtung des Funktionsmoduls den Empfänger, so kann dieser das elektrische Empfangsnachrichtensignal selektiv lediglich aus einer Untermenge von Lichtanteilen eines weißen Lichtsignals, insbesondere aus lediglich einem der Lichtanteile des weißen Lichtsignals, bereitstellen.

Umfasst die erste Kommunikationseinrichtung des Funktionsmoduls den Sender, so kann der Modulator zum Modulieren eines blauen, insbesondere ausschließlich des blauen, Lichtanteils des Lichtsignals ausgebildet sein.

Umfasst die erste Kommunikationseinrichtung des Funktionsmoduls den Empfänger, so kann dieser das elektrische Empfangsnachrichtensignal selektiv aus einem blauen Lichtanteil, insbesondere ausschließlich aus dem blauen Lichtanteil, des Lichtsignals bereitstellen.

Das Funktionsmodul kann auch eine zweite Kommunikationseinrichtung zur drahtlosen Datenübertragung mit dem externen Haushaltsgerät in einer zur ersten Kommunikationsrichtung entgegengesetzten zweiten Kommunikationsrichtung umfassen. Diese zweite Kommunikationseinrichtung kann einen Sender oder einen Empfänger umfassen. Der Sender ist zum Aussenden eines Kommunikationssignals in einem von dem Spektralbereich des Lichtsignals der ersten Kommunikationseinrichtung verschiedenen Spektralbereich ausgebildet. Der Empfänger ist zum Empfangen eines Kommunikationssignals in einem von dem Spektralbereich des Lichtsignals der ersten Kommunikationseinrichtung des Funktionsmoduls verschiedenen Spektralbereich ausgebildet.

Der Sender der zweiten Kommunikationseinrichtung des Funktionsmoduls kann zum Erzeugen eines Infrarotsignals als Kommunikationssignal ausgebildet sein. Der Empfänger der zweiten Kommunikationseinrichtung kann wiederum zum Empfangen eins Infrarotsignals als Kommunikationssignal ausgebildet sein.

Das Funktionsmodul kann auch eine Sekundärspule zum induktiven Empfangen von elektrischer Energie von dem Haushaltsgerät aufweisen.

Die Erfindung betrifft des Weiteren ein Verfahren zur zumindest unidirektionalen drahtlosen Datenkommunikation zwischen einem Haushaltsgerät einerseits und einem Funktionsmodul andererseits, wobei bei der Datenkommunikation ein Modulator eines Senders eines ersten der beiden Kommunikationspartner ein elektrisches Sendenachrichtensignal bereitstellt und eine Lichtquelle des Senders ein entsprechend dem Sendenachrichtensignal moduliertes Lichtsignal aussendet, welches mittels eines Empfängers des zweiten Kommunikationspartners empfangen wird, der aus dem Lichtsignal ein elektrisches Empfangsnachrichtensignal bereitstellt. Das Lichtsignal wird in einem sichtbaren Spektralbereich erzeugt.

Die mit Bezug auf das erfindungsgemäße System vorgestellten bevorzugten Ausführungsformen und deren Vorteile gelten entsprechend für das erfindungsgemäße Verfahren.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1: in schematischer und abstrakter Darstellung ein System gemäß einer Ausführungsform der Erfindung;
- Fig. 2: ein Blockdiagramm einer ersten Kommunikationseinrichtung eines ersten Kommunikationspartners; und
- Fig. 3: ein Blockdiagramm einer ersten Kommunikationseinrichtung eines zweiten Kommunikationspartners.

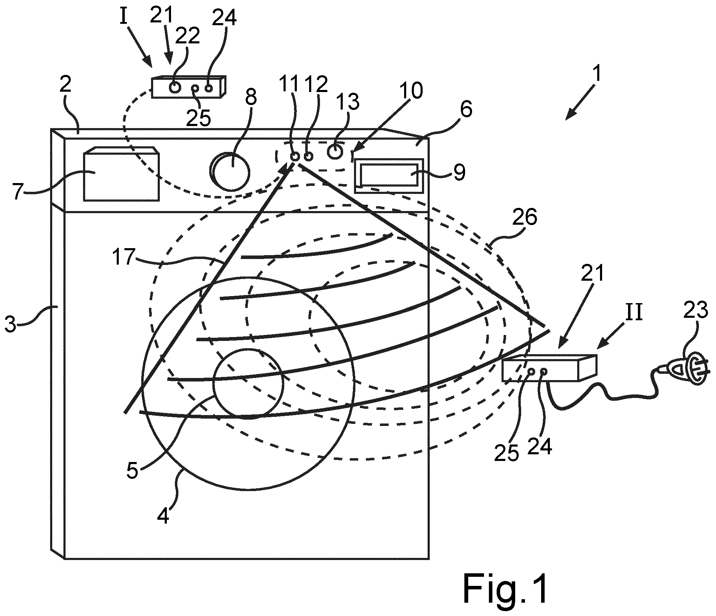

Ein in Fig. 1 dargestelltes System 1 umfasst ein Haushaltsgerät 2, welches im Ausführungsbeispiel als Gerät zur Pflege von Wäschestücken, insbesondere als eine Waschmaschine, ausgebildet ist. Das Haushaltsgerät 2 umfasst in an sich bekannter Weise eine drehbar in einem Gehäuse 3 gelagerte Wäschetrommel 4, welche beispielsweise um eine horizontal verlaufende Drehachse drehbar gelagert ist. Durch eine Trommelöffnung 5 können Wäschestücke in die Wäschetrommel 4 eingebracht werden. Das Haushaltsgerät 2 umfasst des Weiteren eine Bedienblende 6 mit einem Waschmittelkasten 7, einem Programmdrehwähler 8 zur Auswahl eines Betriebsprogramms, wie auch ein Display 9 zur Anzeige von Benutzerinformationen des Haushaltsgeräts 2. Auf dem Display 9 kann beispielsweise der aktuelle Status eines ausgewählten Betriebsprogramms angezeigt werden. Auf dem Display 9 können ergänzend oder alternativ Parameterwerte von Betriebsparametern des Haushaltsgeräts 2 angezeigt werden.

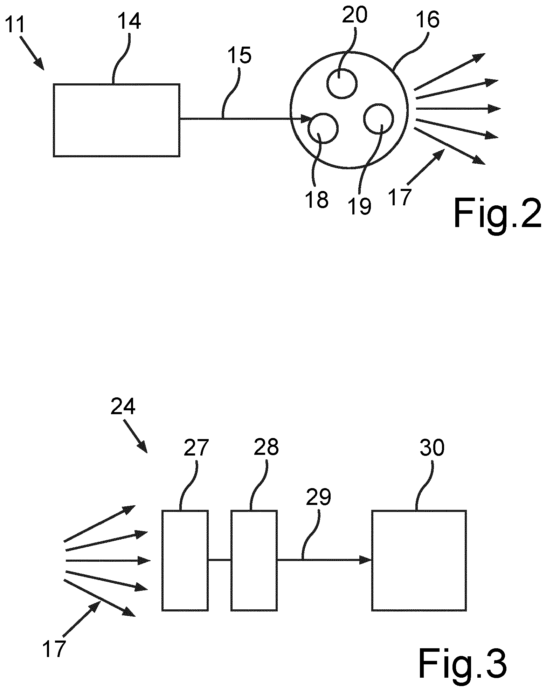

In die Bedienblende 6 ist außerdem eine Vorrichtung 10 integriert, welche eine erste Kommunikationseinrichtung 11, eine zweite Kommunikationseinrichtung 12 sowie eine Primärspule 13 umfasst. Ein vereinfachtes Blockdiagramm der ersten Kommunikationseinrichtung 11 ist dabei in Fig. 2 veranschaulicht. Die erste Kommunikationseinrichtung 11 des Haushaltsgeräts 2 umfasst einen Modulator 14, welcher ein digitales Sendenachrichtensignal 15 ausgibt. In dem Sendenachrichtensignal 15 sind Nachrichten enthalten, die durch die erste Kommunikationseinrichtung 11 drahtlos ausgesendet werden sollen. Die erste Kommunikationseinrichtung 11 umfasst außerdem eine Lichtquelle 16, welche zum Erzeugen eines weißen Lichtsignals 17 (vgl. auch Fig. 1) ausgebildet ist. Zu diesem Zwecke beinhaltet die Lichtquelle 16 zumindest zwei, beispielsweise drei, Leuchtelemente 18, 19, 20, nämlich insbesondere LEDs. Die Leuchtelemente 18, 19, 20 sind zum Erzeugen von unterschiedlichen Lichtanteilen ausgebildet, welche unterschiedliche Farben aufweisen. Das Leuchtelement 18 ist zum Erzeugen eines blauen Lichtsignals ausgebildet. Die weiteren Leuchtelemente 19, 20 können einerseits einen grünen und andererseits einen roten Lichtanteil bereitstellen, sodass insgesamt weißes Licht erzeugt wird.

Der Modulator 14 ist im Ausführungsbeispiel ausschließlich zur Ansteuerung bzw. zur Modulation des Leuchtelements 18 vorgesehen und moduliert somit den blauen Lichtanteil des weißen Lichtsignals 17. Der Modulator 14 unterbricht mit seinem Nachrichtensendesignal 15 also nur den blauen Lichtanteil des weißten Lichtsignals 17 für winzige Augenblicke und schaltet diesen unsichtbar für das menschliche Auge extrem schnell an und wieder aus, um die entsprechenden Nachrichten auszusenden. Mit anderen Worten wird dem blauen Lichtanteil des weißen Lichtsignals 17 die zu übertragende Nachricht aufgeprägt.

Die erste Kommunikationseinrichtung 11 bildet also insgesamt einen Sender zum Aussenden des Lichtsignals 17 im sichtbaren Spektralbereich.

Demgegenüber ist die zweite Kommunikationseinrichtung 12 des Haushaltsgeräts 2 als Empfänger ausgebildet, welcher zum Empfangen von Kommunikationssignalen dient. Es wird hier ein Infrarotempfänger mit einer Infrarot-Photodiode verwendet.

Mit erneutem Bezug auf Fig. 1 beinhaltet das System 1 außerdem ein von dem Haushaltsgerät 2 separates Funktionsmodul 21, welches zur bidirektionalen drahtlosen Datenkommunikation mit der Vorrichtung 10 des Haushaltsgeräts 2 ausgebildet ist. In Fig. 1 sind dabei zwei verschiedene Ausführungsformen des Funktionsmoduls 21 in zwei verschiedenen Positionen I sowie II dargestellt. Gemäß der ersten Ausführungsform kann das Funktionsmodul 21 eine Sekundärspule 22 aufweisen, sodass das Funktionsmodul 21 über das Haushaltsgerät 2 mit elektrischer Energie versorgt werden kann. Das Funktionsmodul 21 kann hier auf dem Haushaltsgerät 2 - beispielsweise mittels eines Permanentmagneten - positioniert und befestigt werden, und zwar derart, dass die Sekundärspule 22 in Überdeckung mit der Primärspule 13 gebracht wird. Es erfolgt dann eine Übertragung der elektrischen Energie induktiv von der Primärspule 13 an die Sekundärspule 22. Gemäß der Position I wird das Funktionsmodul 21 insbesondere an der Frontseite des Haushaltsgeräts 2 angebracht.

Gemäß der zweiten Ausführungsform weist das Funktionsmodul 21 einen Stecker 23 auf, über welchen das Funktionsmodul 21 an ein öffentliches Stromnetz angeschlossen werden kann. Das Funktionsmodul 21 wird hier unabhängig von dem Haushaltsgerät 2 positioniert.

Allen Ausführungsformen ist gemein, dass das Funktionsmodul 21 eine erste Kommunikationseinrichtung 24 sowie eine zweite Kommunikationseinrichtung 25 aufweist. Im Ausführungsbeispiel ist die erste Kommunikationseinrichtung 24 als Empfänger ausgebildet, der zum Empfangen des modulierten sichtbaren Lichtsignals 17 dient. Die zweite Kommunikationseinrichtung 25 wiederum ist als Sender ausgebildet, nämlich insbesondere als Infrarotsender. Durch die zweite Kommunikationseinrichtung 25 wird ein Kommunikationssignal 26 ausgesendet, welches ein ungerichtetes Infrarotsignal ist.

Die jeweiligen ersten Kommunikationseinrichtungen 11, 24 dienen also zur Datenkommunikation in einer ersten Kommunikationsrichtung ("Downlink"). Die jeweiligen zweiten Kommunikationseinrichtungen 12, 25 dienen wiederum zur Datenkommunikation in einer entgegengesetzten zweiten Kommunikationsrichtung ("Uplink").

Ein schematisches Blockdiagramm der ersten Kommunikationseinrichtung 24 des Funktionsmoduls 21 ist in Fig. 3 veranschaulicht. Diese als Empfänger ausgebildete Kommunikationseinrichtung 24 umfasst ein Farbfilter 27, welches ausschließlich für den blauen Lichtanteil des weißen Lichtsignals 17 durchlässig ist und die anderen Lichtanteile herausfiltert. Eine Photodiode 28 empfängt den blauen Lichtanteil und wandelt diesen in ein elektrisches Empfangsnachrichtensignal 29 um, welches an eine elektronische Recheneinrichtung 30 abgegeben und mittels dieser verarbeitet und ausgewertet wird. Alternativ zu einem Farbfilter 27 kann auch eine Photodiode 28 eingesetzt werden, welche selektiv für den blauen Lichtanteil empfindlich ist.

Die bidirektionale Datenkommunikation erfolgt also einerseits mittels des sichtbaren Lichtsignals 17 und andererseits mit Hilfe des Kommunikationssignals 26, welches einen von dem Spektralbereich des Lichtsignals 17 verschiedenen Spektralbereich aufweist und insbesondere ein Infrarot-Lichtsignal ist. Die Daten können somit gleichzeitig in beide Richtungen übertragen werden, ohne dass es zu einer Interferenz zwischen den jeweiligen Signalen kommt. Das Funktionsmodul 21 wird dabei in einer direkten Sichtverbindung mit der Vorrichtung 10 angeordnet. In der Position I wird das Funktionsmodul 21 so an dem Haushaltsgerät 2 angebracht, dass die Lichtquelle 16 und die Photodiode 28 in eine ausreichende Überdeckung bzw. Gegenüberstellung gebracht werden. Entsprechendes gilt auch für den Infrarotsender und den Infrarotempfänger. Auch in der zweiten Position II wird das Funktionsmodul 21 so positioniert, dass die beiderseitigen Kommunikationseinrichtungen 11, 12, 24, 25 in einer direkten Sichtverbindung angeordnet sind.

Als die Lichtquelle 16 wird vorzugsweise eine an der Bedienblende 6 ohnehin bereits vorhandene Lichtquelle verwendet, die zusätzlich auch zur optischen Anzeige von Benutzerinformationen dient. Diese Lichtquelle 16 kann beispielsweise den eingeschalteten Zustand des Haushaltsgeräts 2 signalisieren. Alternativ kann die Lichtquelle 16 auch eine Lichtquelle des Displays 9 sein.

Die Datenkommunikation in der ersten Kommunikationsrichtung, das heißt zwischen den jeweiligen ersten Kommunikationseinrichtungen 11 und 24, erfolgt bevorzugt entsprechend dem VLC-Kommunikationsstandard (Visible Light Communication). Die Datenübertragung kann hier über mehrere Meter erfolgen, solange sich der Empfänger in direkter Sichtverbindung bezüglich des Senders befindet. Je nach Helligkeit des weißen Lichtsignals 17 werden dabei Datenraten bis zu 500 Megabit pro Sekunde erreicht.

In der zweiten Kommunikationsrichtung können mittels des Infrarot-Lichtsignals 26 Datenraten von bis zu 100 Megabit pro Sekunde erreicht werden.

Durch die beschriebene Erfindung lassen sich einfach, sicher und mit ausreichender Bandbreite externe Funktionsmodule 21 kontaktlos bzw. drahtlos mit einem Haushaltsgerät 2 verbinden und dadurch die Funktionen des Haushaltsgeräts 2 bezüglich Bedienung, Steuerung und Wartung erweitern. Ein solches Funktionsmodul 21 kann durch den Benutzer bzw. den Endverbraucher selbst problemlos installiert und ausgetauscht werden. Das externe elektronische Funktionsmodul 21 kann beispielsweise die Funktion eines Kommunikations-Gateways aufweisen, welches zur Anbindung des Haushaltsgeräts 2 an drahtgebundene oder funkbasierte Hausnetzwerke und/oder an das Internet und/oder an ein externes Programmiergerät und/oder an ein Diagnosegerät dient. Das Funktionsmodul 21 kann auch als eine Bedieneinrichtung zum Bedienen des Haushaltsgeräts 2 dienen. Der Benutzer kann dann das gewünschte Betriebsprogramm direkt an dem Funktionsmodul 21 auswählen und das Haushaltsgerät 2 aktivieren. Das Funktionsmodul 21 kann auch ein Display aufweisen, auf welchem die Informationen des Haushaltsgeräts 2 angezeigt werden können.

Zwischen dem Haushaltsgerät 2 und dem Funktionsmodul 21 können also insgesamt Daten übertragen werden, die sich auf den Betrieb des Haushaltsgeräts 2 beziehen. Diese Daten können einerseits Steuerbefehle beinhalten, durch welche das Haushaltsgerät 2 angesteuert wird. Außerdem können die Daten auch Konfigurationsdaten - insbesondere mit neuen Betriebsprogrammen - beinhalten, welche auf das Haushaltsgerät 2 überspielt werden. Andererseits können die Daten auch Sensordaten beinhalten, welche in dem Haushaltsgerät 2 mittels entsprechender Sensoren bereitgestellt und an das Funktionsmodul 21 übertragen werden. Mittels des Funktionsmoduls 21 können auch Fehlerdaten aus einem Speicher des Haushaltsgeräts 2 ausgelesen werden.

### Bezugszeichenliste

- 1: System
- 2: Haushaltsgerät
- 3: Gehäuse
- 4: Wäschetrommel
- 5: Trommelöffnung
- 6: Bedienblende
- 7: Waschmittelkasten
- 8: Programmdrehwähler
- 9: Display
- 10: Vorrichtung
- 11: erste Kommunikationseinrichtung
- 12: zweite Kommunikationseinrichtung
- 13: Primärspule
- 14: Modulator
- 15: Sendenachrichtensignal
- 16: Lichtquelle
- 17: Lichtsignal
- 18: Leuchtelement
- 19: Leuchtelement
- 20: Leuchtelement
- 21: Funktionsmodul
- 22: Sekundärspule
- 23: Stecker
- 24: erste Kommunikationseinrichtung
- 25: zweite Kommunikationseinrichtung
- 26: Kommunikationssignal
- 27: Farbfilter
- 28: Photodiode
- 29: Empfangsnachrichtensignal
- 30: Recheneinrichtung
- I, II: Positionen

## Patentansprüche

1. System (1) mit einem Haushaltsgerät (2) und einem von dem Haushaltsgerät (2) separaten Funktionsmodul (21), wobei das Haushaltsgerät (2) und das Funktionsmodul (21) zur zumindest unidirektionalen drahtlosen Datenkommunikation miteinander ausgebildet sind, und wobei:
- ein erster der Kommunikationspartner Haushaltsgerät (2) oder Funktionsmodul (21) einen Sender (14, 16) umfasst, welcher einen Modulator (14) zum Bereitstellen eines elektrischen Sendenachrichtensignals (15) und eine Lichtquelle (16) zum Aussenden eines entsprechend dem Sendenachrichtensignal (15) modulierten Lichtsignals (17) umfasst, und
- der zweite der Kommunikationspartner einen Empfänger (27, 28) zum Empfangen des Lichtsignals (17) und zum Bereitstellen eines elektrischen Empfangsnachrichtensignals (29) aus dem Lichtsignal (17) umfasst,
- wobei die Lichtquelle (16) des Senders (14, 16) zum Erzeugen des Lichtsignals (17) in einem sichtbaren Spektralbereich ausgebildet ist und der Empfänger (27, 28) zum Empfangen des Lichtsignals (17) im sichtbaren Spektralbereich ausgebildet ist,
**dadurch gekennzeichnet, dass**
die Lichtquelle (16) des Senders (14, 16) dazu ausgebildet ist, das Lichtsignal (17) aus zumindest zwei Lichtanteilen zu erzeugen, die voneinander verschiedene Farben aufweisen, wobei der Modulator (14) dazu ausgebildet ist, entsprechend dem Sendenachrichtensignal (15) lediglich eine Untermenge der Lichtanteile zu modulieren, um das modulierte Lichtsignal (17) zu erzeugen, und
der Empfänger (27, 28) dazu ausgebildet ist, das elektrische Empfangsnachrichtensignal (29) selektiv lediglich aus der Untermenge der Lichtanteile des Lichtsignals (17) bereitzustellen.

2. System (1) nach Anspruch 1, **dadurch gekennzeichnet, dass** das Haushaltsgerät (2) den Sender (14, 16) und das Funktionsmodul (21) den Empfänger (27, 28) umfassen.

3. System (1) nach Anspruch 1 oder 2, **dadurch gekennzeichnet, dass**
- die Lichtquelle (16) des Senders (14, 16) dazu ausgebildet ist, das Lichtsignal (17) aus zumindest zwei Lichtanteilen zu erzeugen, die voneinander verschiedene Farben aufweisen, wobei der Modulator (14) dazu ausgebildet ist, entsprechend dem Sendenachrichtensignal (15) ausschließlich einen der Lichtanteile zu modulieren, um das modulierte Lichtsignal (17) zu erzeugen, und
- der Empfänger (27, 28) dazu ausgebildet ist, das elektrische Empfangsnachrichtensignal (29) selektiv lediglich aus dem modulierten Lichtanteil des Lichtsignals (17) bereitzustellen.

4. System (1) nach einem der vorhergehenden Ansprüche, **dadurch gekennzeichnet, dass** die Lichtquelle (16) zumindest zwei Leuchtelemente (18, 19, 20), insbesondere zumindest zwei Leuchtdioden, zum Erzeugen der zumindest zwei verschiedenen Lichtanteile des Lichtsignals (17) aufweist und der Modulator (14) lediglich mit einer Untermenge der Leuchtelemente (18, 19, 20), insbesondere mit ausschließlich einem der Leuchtelemente (18, 19, 20), zur Ansteuerung dieser Untermenge elektrisch gekoppelt ist.

5. System (1) nach einem der vorhergehenden Ansprüche, **dadurch gekennzeichnet, dass** die Lichtquelle (16) zum Erzeugen eines weißen Lichtsignals (17) aus den zumindest zwei Lichtanteilen ausgebildet ist.

6. System (1) nach einem der vorhergehenden Ansprüche, **dadurch gekennzeichnet, dass**
- der Modulator (14) zum Modulieren eines blauen, insbesondere ausschließlich des blauen, Lichtanteils des Lichtsignals (17) ausgebildet ist und
- der Empfänger (27, 28) dazu ausgebildet ist, das elektrische Empfangsnachrichtensignal (29) selektiv aus dem blauen Lichtanteil, insbesondere ausschließlich aus dem blauen Lichtanteil, des Lichtsignals (17) bereitzustellen.

7. System (1) nach einem der vorhergehenden Ansprüche, **dadurch gekennzeichnet, dass** die Lichtquelle (16) an einer Bedienblende (6) des Haushaltsgeräts (2) angeordnet ist und zusätzlich einen Bestandteil einer Anzeigeeinrichtung des Haushaltsgeräts (2) bildet, welche zur optischen Anzeige von Benutzerinformationen des Haushaltsgeräts (2) ausgebildet ist.

8. System (1) nach einem der vorhergehenden Ansprüche, **dadurch gekennzeichnet, dass** das Haushaltsgerät (2) und das Funktionsmodul (21) zur bidirektionalen drahtlosen Datenkommunikation miteinander ausgebildet sind und:
- der zweite Kommunikationspartner zusätzlich einen Sender (25) aufweist, der zum Aussenden eines Kommunikationssignals (26) in einem von dem Spektralbereich des Lichtsignals (17) verschiedenen Spektralbereich ausgebildet ist, und
- der erste Kommunikationspartner zusätzlich einen Empfänger (12) aufweist, der zum Empfangen des Kommunikationssignals (26) ausgebildet ist.

9. System (1) nach Anspruch 8, **dadurch gekennzeichnet, dass**
- der Sender (25) des zweiten Kommunikationspartners zum Erzeugen eines Infrarotsignals als Kommunikationssignal (26) ausgebildet ist und
- der Empfänger (12) des ersten Kommunikationspartners zum Empfangen des Infrarotsignals ausgebildet ist.

10. System (1) nach Anspruch 8 oder 9, **dadurch gekennzeichnet, dass** der Sender (25) des zweiten Kommunikationspartners zum Erzeugen eines ungerichteten Lichtsignals als Kommunikationssignal (26) ausgebildet ist.

11. System (1) nach einem der vorhergehenden Ansprüche, **dadurch gekennzeichnet, dass** das Haushaltsgerät (2) eine Primärspule (13) zur induktiven Übertragung von elektrischer Energie an das Funktionsmodul (21) aufweist, und dass das Funktionsmodul (21) eine Sekundärspule (22) zum Empfangen der elektrischen Energie aufweist und mit der empfangenen elektrischen Energie versorgbar ist.

12. System (1) nach einem der vorhergehenden Ansprüche, **dadurch gekennzeichnet, dass** das Funktionsmodul (21) aufweist:
- eine Netzwerkschnittstelle zum Anschließen des Funktionsmoduls an ein Netzwerk, insbesondere ein lokales Netzwerk und/oder an das Internet, sodass insbesondere das Funktionsmodul (21) als ein Gateway zur Anbindung des Haushaltsgeräts (2) an das Netzwerk ausgebildet ist, und/oder
- eine Schnittstelle zum Anschließen eines Programmiergeräts zum Programmieren des Haushaltsgeräts (2) und/oder
- eine Schnittstelle zum Anschließen eines Diagnosegeräts zum Auslesen von Fehlerdaten aus einem Fehlerspeicher des Haushaltsgeräts (2) und/oder
- eine durch einen Benutzer betätigbare Bedieneinrichtung zum Bedienen des Haushaltsgeräts (2) und/oder
- ein Display zur optischen Anzeige von Benutzerinformationen des Haushaltsgeräts (2).

13. Haushaltsgerät (2) mit zumindest einer ersten Kommunikationseinrichtung (11) zur drahtlosen Datenübertragung mit einem externen Funktionsmodul (21) in einer ersten Kommunikationsrichtung, wobei die erste Kommunikationseinrichtung (11) umfasst:
- einen Sender (14, 16) mit einem Modulator (14) zum Bereitstellen eines elektrischen Sendenachrichtensignals (15) und mit einer Lichtquelle (16) zum Aussenden eines entsprechend dem Sendenachrichtensignal (15) modulierten Lichtsignals (17), oder
- einen Empfänger (27, 28) zum Empfangen eines Lichtsignals (17) und zum Bereitstellen eines elektrischen Empfangsnachrichtensignals (29) aus dem Lichtsignal (17),
- wobei die Lichtquelle (16) des Senders (14, 16) zum Erzeugen des Lichtsignals (17) in einem sichtbaren Spektralbereich ausgebildet ist oder
- der Empfänger (27, 28) zum Empfangen des Lichtsignals (17) im sichtbaren Spektralbereich ausgebildet ist,
**dadurch gekennzeichnet, dass**
- die Lichtquelle (16) des Senders (14, 16) dazu ausgebildet ist, das Lichtsignal (17) aus zumindest zwei Lichtanteilen zu erzeugen, die voneinander verschiedene Farben aufweisen, wobei der Modulator (14) dazu ausgebildet ist, entsprechend dem Sendenachrichtensignal (15) lediglich eine Untermenge der Lichtanteile zu modulieren, um das modulierte Lichtsignal (17) zu erzeugen, und
- der Empfänger (27, 28) dazu ausgebildet ist, das elektrische Empfangsnachrichtensignal (29) selektiv lediglich aus der Untermenge der Lichtanteile des Lichtsignals (17) bereitzustellen.

14. Funktionsmodul (21) mit zumindest einer ersten Kommunikationseinrichtung (24) zur drahtlosen Datenübertragung mit einem von dem Funktionsmodul (21) separaten Haushaltsgerät (2) in einer ersten Kommunikationsrichtung, wobei die erste Kommunikationseinrichtung (24) zum Senden oder Empfangen von auf einen Betrieb des Haushaltsgeräts (2) bezogenen Daten ausgebildet ist und umfasst:
- einen Sender (14, 16) mit einem Modulator (14) zum Bereitstellen eines elektrischen Sendenachrichtensignals (15) und mit einer Lichtquelle (16) zum Aussenden eines entsprechend dem Sendenachrichtensignal (15) modulierten Lichtsignals (17), oder
- einen Empfänger (27, 28) zum Empfangen eines Lichtsignals (17) und zum Bereitstellen eines elektrischen Empfangsnachrichtensignals (29) aus dem Lichtsignal (17),
- wobei die Lichtquelle (16) des Senders (14, 16) zum Erzeugen des Lichtsignals (17) in einem sichtbaren Spektralbereich ausgebildet ist oder
- der Empfänger (27, 28) zum Empfangen des Lichtsignals (17) im sichtbaren Spektralbereich ausgebildet ist,
**dadurch gekennzeichnet, dass**
- die Lichtquelle (16) des Senders (14, 16) dazu ausgebildet ist, das Lichtsignal (17) aus zumindest zwei Lichtanteilen zu erzeugen, die voneinander verschiedene Farben aufweisen, wobei der Modulator (14) dazu ausgebildet ist, entsprechend dem Sendenachrichtensignal (15) lediglich eine Untermenge der Lichtanteile zu modulieren, um das modulierte Lichtsignal (17) zu erzeugen, und
- der Empfänger (27, 28) dazu ausgebildet ist, das elektrische Empfangsnachrichtensignal (29) selektiv lediglich aus der Untermenge der Lichtanteile des Lichtsignals (17) bereitzustellen.

15. Verfahren zur zumindest unidirektionalen drahtlosen Datenkommunikation zwischen einem Haushaltsgerät (2) einerseits und einem Funktionsmodul (21) andererseits, wobei bei der Datenkommunikation ein Modulator (14) eines Senders (14, 16) ein elektrisches Sendenachrichtensignal (15) bereitstellt und eine Lichtquelle (16) des Senders (14, 16) ein entsprechend dem Sendenachrichtensignal (15) moduliertes Lichtsignal (17) aussendet, welches mittels eines Empfängers (27, 28) empfangen wird, der aus dem Lichtsignal (17) ein elektrisches Empfangsnachrichtensignal (29) bereitstellt, wobei das Lichtsignal (17) in einem sichtbaren Spektralbereich erzeugt wird, **dadurch gekennzeichnet, dass** das Lichtsignal (17) aus zumindest zwei Lichtanteilen erzeugt wird, die voneinander verschiedene Farben aufweisen, wobei der Modulator (14) entsprechend dem Sendenachrichtensignal (15) lediglich eine Untermenge der Lichtanteile moduliert, um das modulierte Lichtsignal (17) zu erzeugen, und der Empfänger (27, 28) das elektrische Empfangsnachrichtensignal (29) selektiv lediglich aus der Untermenge der Lichtanteile des Lichtsignals (17) bereitstellt.

## Claims

1. System (1) with a household appliance (2) and a functional module (21) which is separate from the household appliance (2), wherein the household appliance (2) and the functional module (21) are embodied for at least unidirectional wireless data communication with one another, and wherein:
- a first of the communication partners household appliance (2) or functional module (21) comprises a transmitter (14, 16), which comprises a modulator (14) for providing an electrical transmit message signal (15) and a light source (16) for emitting a light signal (17) modulated according to the transmit message signal (15), and
- the second of the communication partners comprises a receiver (27, 28) for receiving the light signal (17) and for providing an electrical receive message signal (29) from the light signal (17),
- wherein the light source (16) of the transmitter (14, 16) is embodied to generate the light signal (17) in a visible spectral range and the receiver (27, 28) is embodied to receive the light signal (17) in the visible spectral range,
**characterised in that**
the light source (16) of the transmitter (14, 16) is embodied to generate the light signal (17) from at least two light portions, which have colours which differ from one another, wherein the modulator (14) is embodied to modulate only a subset of the light portions in accordance with the transmit message signal (15) in order to generate the modulated light signal (17), and
the receiver (27, 28) is embodied to provide the electrical receive message signal (29) selectively only from the subset of the light portions of the light signal (17).

2. System (1) according to claim 1, **characterised in that** the household appliance (2) comprises the transmitter (14, 16) and the functional module (21) comprises the receiver (27, 28).

3. System (1) according to claim 1 or 2, **characterised in that**
- the light source (16) of the transmitter (14, 16) is embodied to generate the light signal (17) from at least two light portions, which have colours which differ from one another, wherein the modulator (14) is embodied to modulate exclusively one of the light portions in accordance with the transmit message signal (15) in order to generate the modulated light signal (17), and
- the receiver (27, 28) is embodied to provide the electrical receive message signal (29) selectively only from the modulated light portion of the light signal (17).

4. System (1) according to one of the preceding claims, **characterised in that** the light source (16) has at least two light-emitting elements (18, 19, 20), in particular at least two light-emitting diodes, for generating the at least two different light portions of the light signal (17) and the modulator (14) is electrically coupled only with a subset of the light-emitting elements (18, 19, 20), in particular with exclusively one of the light-emitting elements (18, 19, 20) in order to actuate this subset.

5. System (1) according to one of the preceding claims, **characterised in that** the light source (16) is embodied to generate a white light signal (17) from the at least two light portions.

6. System (1) according to one of the preceding claims, **characterised in that**
- the modulator (14) is embodied to modulate a blue, in particular exclusively the blue light portion of the light signal (17), and
- the receiver (27, 28) is embodied to provide the electrical receive message signal (29) selectively from the blue light portion, in particular exclusively from the blue light portion, of the light signal (17).

7. System (1) according to one of the preceding claims, **characterised in that** the light source (16) is arranged on a control panel (6) of the household appliance (2) and additionally forms a component part of a display device of the household appliance (2), which is embodied to optically display user information of the household appliance (2).

8. System (1) according to one of the preceding claims, **characterised in that** the household appliance (2) and the functional module (21) are embodied for bidirectional wireless data communication with one another and:
- the second communication partner additionally has a transmitter (25), which is embodied to emit a communication signal (26) in a spectral range which differs from the spectral range of the light signal (17) and
- the first communication partner additionally has a receiver (12), which is embodied to receive the communication signal (26).

9. System (1) according to claim 8, **characterised in that**
- the transmitter (25) of the second communication partner is embodied to generate an infrared signal as a communication signal (26) and
- the receiver (12) of the first communication partner is embodied to receive the infrared signal.

10. System (1) according to claim 8 or 9, **characterised in that** the transmitter (25) of the second communication partner is embodied to generate an undirected light signal as a communication signal (26).

11. System (1) according to one of the preceding claims, **characterised in that** the household appliance (2) has a primary coil (13) for the inductive transmission of electrical energy to the functional module (21) and that the functional module (21) has a secondary coil (22) for receiving the electrical energy and can be supplied with the received electrical energy.

12. System (1) according to one of the preceding claims, **characterised in that** the functional module (21) has
- a network interface for connecting the functional module to a network, in particular a local network and/or to the Internet, so that in particular the functional module (21) is embodied as a gateway for linking the household appliance (2) to the network, and/or
- an interface for connecting a programming device for programming the household appliance (2) and/or
- an interface for connecting a diagnostic device for reading out error date from an error memory of the household appliance (2) and/or
- an operating device which can be actuated by a user for operating the household appliance (2) and/or
- a display for the optical display of user information of the household appliance (2).

13. Household appliance (2) with at least one first communication device (11) for wireless data transmission with an external functional module (21) in a first communication direction, wherein the first communication device (11) comprises:
- a transmitter (14, 16) with a modulator (14) for providing an electrical transmit message signal (15) and with a light source (16) for emitting a light signal (17) modulated according to the transmit message signal (15), or
- a receiver (27, 28) for receiving a light signal (17) and for providing an electrical receive message signal (29) from the light signal (17),
- wherein the light source (16) of the transmitter (14, 16) is embodied to generate the light signal (17) in a visible spectral range or
- the receiver (27, 28) is embodied to receive the light signal (17) in the visible spectral range,
**characterised in that**
- the light source (16) of the transmitter (14, 16) is embodied to generate the light signal (17) from at least two light portions, which have colours which differ from one another, wherein the modulator (14) is embodied to modulate only one subset of the light portions in accordance with the transmit message signal (15) in order to generate the modulated light signal (17), and
- the receiver (27, 28) is embodied to provide the electrical receive message signal (29) selectively only from the subset of the light portions of the light signal (17).

14. Functional module (21) with at least one first communication device (24) for wireless data communication with a household appliance (2) which is separate from the functional module (21) in a first communication direction, wherein the first communication device (24) is embodied to send or receive data relating to an operation of the household appliance (2) and comprises:
- a transmitter (14, 16) with a modulator (14) for providing an electrical transmit message signal (154) and with a light source (16) for emitting a light signal (17) modulated in accordance with the transmit message signal (15), or
- a receiver (27, 28) for receiving a light signal (17) and for providing an electrical receive message signal (29) from the light signal (17),
- wherein the light source (16) of the transmitter (14, 16) is embodied to generate the light signal (17) in a visible spectral range or
- the receiver (27, 28) is embodied to receive the light signal (17) in the visible spectral range,
**characterised in that**
- the light source (16) of the transmitter (14, 16) is embodied to generate the light signal (17) from at least two light portions, which have colours which differ from one another, wherein the modulator (14) is embodied to modulate only one subset of the light portions in accordance with the transmit message signal (15) in order to generate the modulated light signal (17), and
- the receiver (27, 28) is embodied to provide the electrical receive message signal (29) selectively only from the subset of the light portions of the light signal (17).

15. Method for at least unidirectional wireless data communication between a household appliance (2) on the one hand and a functional module (21) on the other hand, wherein, with the data communication, a modulator (14) of a transmitter (14, 16) provides an electrical transmit message signal (15) and a light source (16) of the transmitter (14, 16) emits a light signal (17) which is modulated in accordance with the transmit message signal (15) and received by means of a receiver (27, 28), which provides an electrical receive message signal (29) from the light signal (17), wherein the light signal (17) is generated in a visible spectral range, **characterized in that** the light signal (17) is generated from at least two light portions, which have colours which differ from one another, wherein the modulator (14) modulates only one subset of the light portions in accordance with the transmit message signal (15), in order to generate the modulated light signal (17), and the receiver (27, 28) provides the electrical receive message signal (29) selectively only from the subset of the light portions of the light signal (17).

## Revendications

1. Système (1) comprenant un appareil ménager (2) et un module fonctionnel (21) séparé de l'appareil ménager (2), l'appareil ménager (2) et le module fonctionnel (21) étant réalisés pour la communication de données sans fil au moins unidirectionnelle entre eux, et :
- un premier des partenaires de communication, appareil ménager (2) ou module fonctionnel (21), comprenant un émetteur (14, 16) lequel comprend un modulateur (14) destiné à fournir un signal électrique de message d'émission (15), et une source lumineuse (16) destinée à émettre un signal lumineux (17) modulé de manière correspondant au signal de message d'émission (15), et
- le deuxième partenaire de communication comprenant un récepteur (27, 28) destiné à recevoir le signal lumineux (17) et à fournir un signal électrique de message de réception (29) à partir du signal lumineux (17),
- la source lumineuse (16) de l'émetteur (14, 16) étant réalisée pour générer le signal lumineux (17) dans un domaine spectral visible, et le récepteur (27, 28) étant réalisé pour recevoir le signal lumineux (17) dans le domaine spectral visible,
**caractérisé en ce que**
la source lumineuse (16) de l'émetteur (14, 16) est réalisée pour générer le signal lumineux (17) à partir d'au moins deux fractions de lumière qui présentent des couleurs différentes les unes des autres, le modulateur (14) étant réalisé pour moduler seulement une quantité partielle des fractions de lumière de manière correspondant au signal de message d'émission (15) afin de générer le signal lumineux (17) modulé, et
**en ce que** le récepteur (27, 28) est réalisé pour fournir le signal électrique de message de réception (29) de manière sélective uniquement à partir de la quantité partielle des fractions de lumière du signal lumineux (17).

2. Système (1) selon la revendication 1, **caractérisé en ce que** l'appareil ménager (2) comprend l'émetteur (14, 16) et **en ce que** le module fonctionnel (21) comprend le récepteur (27, 28).

3. Système (1) selon la revendication 1 ou 2, **caractérisé en ce que**
- la source lumineuse (16) de l'émetteur (14, 16) est réalisée pour générer le signal lumineux (17) à partir d'au moins deux fractions de lumière qui présentent des couleurs différentes les unes des autres, le modulateur (14) étant réalisé pour moduler uniquement une des fractions de lumière de manière correspondant au signal de message d'émission (15) afin de générer le signal lumineux (17) modulé, et
- **en ce que** le récepteur (27, 28) est réalisé pour fournir le signal électrique de message de réception (29) de manière sélective uniquement à partir de la fraction de lumière modulée du signal lumineux (17).

4. Système (1) selon l'une quelconque des revendications précédentes, **caractérisé en ce que** la source lumineuse (16) présente au moins deux éléments lumineux (18, 19, 20), notamment au moins deux diodes électroluminescentes, pour générer les au moins deux fractions de lumière différentes du signal lumineux (17), et **en ce que** le modulateur (14) est électriquement couplé seulement à une quantité partielle des éléments lumineux (18, 19, 20), notamment uniquement à l'un des éléments lumineux (18, 19, 20), pour la commande de cette quantité partielle.

5. Système (1) selon l'une quelconque des revendications précédentes, **caractérisé en ce que** la source lumineuse (16) est réalisée pour générer un signal lumineux (17) blanc à partir des au moins deux fractions de lumière.

6. Système (1) selon l'une quelconque des revendications précédentes, **caractérisé en ce que**
- le modulateur (14) est réalisé pour moduler une fraction de lumière bleue du signal lumineux (17), notamment uniquement de la fraction de lumière bleue, et
- **en ce que** le récepteur (27, 28) est réalisé pour fournir le signal électrique de message de réception (29) de manière sélective à partir de la fraction de lumière bleue, notamment uniquement à partir de la fraction de lumière bleue du signal lumineux (17).

7. Système (1) selon l'une quelconque des revendications précédentes, **caractérisé en ce que** la source lumineuse (16) est disposée sur un panneau de commande (6) de l'appareil ménager (2) et forme en outre une partie constituante d'un dispositif d'affichage de l'appareil ménager (2), lequel est réalisé pour l'affichage optique d'informations utilisateur de l'appareil ménager (2).

8. Système (1) selon l'une quelconque des revendications précédentes, **caractérisé en ce que** l'appareil ménager (2) et le module fonctionnel (21) sont réalisés pour la communication de données sans fil bidirectionnelle entre eux, et :
- **en ce que** le deuxième partenaire de communication présente en outre un émetteur (25) qui est réalisé pour émettre un signal de communication (26) dans un domaine spectral différent du domaine spectral du signal lumineux (17), et
- **en ce que** le premier partenaire de communication présente en outre un récepteur (12) qui est réalisé pour recevoir le signal de communication (26).

9. Système (1) selon la revendication 8, **caractérisé en ce que**
- l'émetteur (25) du deuxième partenaire de communication est réalisé pour générer un signal infrarouge en tant que signal de communication (26), et
- **en ce que** le récepteur (12) du premier partenaire de communication est réalisé pour recevoir le signal infrarouge.

10. Système (1) selon la revendication 8 ou 9, **caractérisé en ce que** l'émetteur (25) du deuxième partenaire de communication est réalisé pour générer un signal lumineux non-directionnel en tant que signal de communication (26).

11. Système (1) selon l'une quelconque des revendications précédentes, **caractérisé en ce que** l'appareil ménager (2) présente une bobine primaire (13) pour la transmission inductive d'énergie électrique au module fonctionnel (21), et **en ce que** le module fonctionnel (21) présente une bobine secondaire (22) pour la réception de l'énergie électrique et **en ce qu'**il peut être alimenté avec l'énergie électrique reçue.

12. Système (1) selon l'une quelconque des revendications précédentes, **caractérisé en ce que** le module fonctionnel (21) présente :
- une interface de réseau pour la connexion du module fonctionnel à un réseau, notamment un réseau local et/ou Internet, de sorte que notamment le module fonctionnel (21) est réalisé en tant qu'une passerelle pour la liaison de l'appareil ménager (2) au réseau, et/ou
- une interface pour la connexion d'un appareil de programmation destiné à programmer l'appareil ménager (2), et/ou
- une interface pour la connexion d'un appareil de diagnostic destiné à lire des données d'erreur à partir d'une mémoire d'erreurs de l'appareil ménager (2), et/ou
- un dispositif de commande commandable par un utilisateur, destiné à la commande de l'appareil ménager (2), et/ou
- un écran pour l'affichage optique d'informations utilisateur de l'appareil ménager (2).

13. Appareil ménager (2) comprenant au moins un premier dispositif de communication (11) pour la transmission de données sans fil à un module fonctionnel (21) externe dans une première direction de communication, le premier dispositif de communication (11) comprenant :
- un émetteur (14, 16) doté d'un modulateur (14) destiné à fournir un signal électrique de message d'émission (15) et doté d'une source lumineuse (16) destinée à émettre un signal lumineux (17) modulé de manière correspondant au signal de message d'émission (15), ou
- un récepteur (27, 28) destiné à recevoir un signal lumineux (17) et destiné à fournir un signal électrique de message de réception (29) à partir du signal lumineux (17),
- la source lumineuse (16) de l'émetteur (14, 16) étant réalisée pour générer le signal lumineux (17) dans un domaine spectral visible, ou
- le récepteur (27, 28) étant réalisé pour recevoir le signal lumineux (17) dans le domaine spectral visible,
**caractérisé en ce que**
- la source lumineuse (16) de l'émetteur (14, 16) est réalisée pour générer le signal lumineux (17) à partir d'au moins deux fractions de lumière qui présentent des couleurs différentes les unes des autres, le modulateur (14) étant réalisé pour moduler seulement une quantité partielle des fractions de lumière de manière correspondant au signal de message d'émission (15) afin de générer le signal lumineux (17) modulé, et
- **en ce que** le récepteur (27, 28) est réalisé pour fournir le signal électrique de message de réception (29) de manière sélective uniquement à partir de la quantité partielle des fractions de lumière du signal lumineux (17).

14. Module fonctionnel (21) comprenant au moins un premier dispositif de communication (24) pour la transmission de données sans fil à un appareil ménager (2) séparé du module fonctionnel (21) dans une première direction de communication, le premier dispositif de communication (24) étant réalisé pour émettre ou recevoir des données relatives à un fonctionnement de l'appareil ménager (2), et comprenant :
- un émetteur (14, 16) doté d'un modulateur (14) destiné à fournir un signal électrique de message d'émission (15) et doté d'une source lumineuse (16) destinée à émettre un signal lumineux (17) modulé de manière correspondant au signal de message d'émission (15), ou
- un récepteur (27, 28) destiné à recevoir un signal lumineux (17) et destiné à fournir un signal électrique de message de réception (29) à partir du signal lumineux (17),
- la source lumineuse (16) de l'émetteur (14, 16) étant réalisée pour générer le signal lumineux (17) dans un domaine spectral visible, ou
- le récepteur (27, 28) étant réalisé pour recevoir le signal lumineux (17) dans le domaine spectral visible,
**caractérisé en ce que**
- la source lumineuse (16) de l'émetteur (14, 16) est réalisée pour générer le signal lumineux (17) à partir d'au moins deux fractions de lumière qui présentent des couleurs différentes les unes des autres, le modulateur (14) étant réalisé pour moduler seulement une quantité partielle des fractions de lumière de manière correspondant au signal de message d'émission (15) afin de générer le signal lumineux (17) modulé, et
- **en ce que** le récepteur (27, 28) est réalisé pour fournir le signal électrique de message de réception (29) de manière sélective uniquement à partir de la quantité partielle des fractions de lumière du signal lumineux (17).

15. Procédé pour la communication de données sans fil au moins unidirectionnelle entre un appareil ménager (2) d'une part et un module fonctionnel (21) d'autre part, un modulateur (14) d'un émetteur (14, 16), lors de la communication de données, fournissant un signal électrique de message d'émission (15), et une source lumineuse (15) de l'émetteur (14, 16) émettant un signal lumineux (17) modulé de manière correspondant au signal de message d'émission (15) lequel est reçu au moyen d'un récepteur (27, 28) qui fournit un signal électrique de message de réception (29) à partir du signal lumineux (17), le signal lumineux (17) étant généré dans un domaine spectral visible, **caractérisé en ce que** le signal lumineux (17) est généré à partir d'au moins deux fractions de lumière qui présentent des couleurs différentes les unes des autres, le modulateur (14) modulant seulement une quantité partielle des fractions de lumière de manière correspondant au signal de message d'émission (15) afin de générer le signal lumineux (17) modulé, et le récepteur (27, 28) fournissant le signal électrique de message de réception (29) de manière sélective uniquement à partir de la quantité partielle des fractions de lumière du signal lumineux (17).
